(19) **Europäisches Patentamt**
**European Patent Office**
**Office européen des brevets**

(11) **EP 4 042 102 B1**

(12) **EUROPEAN PATENT SPECIFICATION**

(45) Date of publication and mention
of the grant of the patent:
**14.08.2024 Bulletin 2024/33**

(21) Application number: **20793066.0**

(22) Date of filing: **08.10.2020**

(51) International Patent Classification (IPC):
***G01B 11/27*** *(2006.01)* ***B23Q 17/24*** *(2006.01)*

(52) Cooperative Patent Classification (CPC):
**G01B 11/272; B23Q 17/2485;** B23Q 2017/001

(86) International application number:
**PCT/GB2020/052484**

(87) International publication number:
**WO 2021/069893 (15.04.2021 Gazette 2021/15)**

(54) **APPARATUS AND METHOD FOR DETERMINING THE RUNOUT OF A TOOL IN A MACHINE TOOL**

VORRICHTUNG UND VERFAHREN ZUR BESTIMMUNG DES RUNDLAUFES EINES WERKZEUGS IN EINER WERKZEUGMASCHINE

APPAREIL ET PROCÉDÉ DE DÉTERMINATION DE L'EXCENTRICITÉ D'UN OUTIL DANS UNE MACHINE-OUTIL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.10.2019 GB 201914730**

(43) Date of publication of application:
**17.08.2022 Bulletin 2022/33**

(73) Proprietor: **Renishaw PLC**
**Wotton-under-Edge, Gloucestershire GL12 8JR (GB)**

(72) Inventors:
• **MERRIFIELD, Benjamin Jason**
**Wotton-under-Edge**
**Gloucestershire GL12 8JR / GB (GB)**

• **HOYLE, Samuel David**
**Wotton-under-Edge**
**Gloucestershire GL12 8JR / GB (GB)**

(74) Representative: **Dunn, Paul Edward et al**
**Renishaw plc**
**Patent Department**
**New Mills**
**Wotton-under-Edge, Glos. GL12 8JR (GB)**

(56) References cited:
WO-A1-2005/085753    CN-A- 110 270 705
JP-A- 2003 170 335

**Description**

The present invention relates to an improved technique for measuring runout of a tool, such as a fluted cutting tool, using a tool edge sensor mounted to the machine tool.

It is known to measure the runout of cylindrical shafts using a dial test indicator (DTI). Such measurements involve placing the tip of the DTI into contact with the shaft and using the DTI to measure the back and forth motion of the tip as the shaft is rotated. The difference between the maximum and minimum tip deflection values provide a measure of the total indicated runout (TIR) of the shaft.

It is also known to measure the runout of a fluted cutting tool using a DTI. Such fluted tools have cutting teeth that typically spiral or twist along the length of the tool. All cutting teeth are assumed to extend the same radial distance from the central axis of the tool and runout is determined by using the DTI to measure the difference in tip deflection that occurs when different cutting teeth are brought into contact with the tip of the DTI. In particular, the DTI establishes the TIR from the difference in the radial position of the two teeth that deflect the tip of the DTI by the largest and smallest amounts.

Non-contact break-beam tool measurement devices for use on machine tools (e.g. machining centres, lathes, milling machines etc) and the like are also known. For example, the so-called NC4 non-contact tool setting system is sold by Renishaw plc, Wotton-Under-Edge, UK. The NC4 apparatus comprises a transmitter that includes a laser source for generating a light beam. The light beam is directed to a receiver through a region of free space into which a rotating tool can be placed. During a tool measurement operation, the machine tool on which the tool setter is mounted is programmed to move the tool into and/or out of the light beam. The output signal from the receiver indicates the amount of obscuration of the light beam and the apparatus compares this received intensity signal to a threshold. A so-called trigger signal is generated by the apparatus to indicate the tool has reached a certain position relative to the beam. The trigger signal allows a position of the tool to be established by the machine tool thereby allowing the length or diameter of tools to be measured. For tool runout measurements, the tool is rotated as it is moved relative to the light beam. The tool position is measured twice. A first tool position is found when what appears to be the longest tooth is detected and a second tool position is found when what appears to be the shortest tooth is detected. These measurements are performed a certain distance up the tool from the tool tip. The difference in measured tool position (tool radius) for these teeth are used as a measure of the TIR, in a similar manner to the maximum/minimum deflection measurements made with a DTI that are mentioned above.

CN 110270705 A discloses a tool sensing apparatus for measuring runout of a tool comprising a dial gauge fixed on a machine table for measuring the position of the edge of the tool at three rotational orientations and a processor for determining the runout of the tool based on the maximal measured offset value.

The present inventors have, however, found that such runout measurements of certain cutting tools (taken using DTIs or non-contact tool measurement apparatus) are unexpectedly subject to error. This is especially the case for fluted tools in which multiple teeth spiral along the length of the tool. In particular, the present inventors have found that the TIR measured using the above described technique varies along the length of the cutting tool. As explained in detail below, this is because the measured radius of a cutting edge will vary in a manner that depends on both the runout and the circumferential position of that tooth on the tool. The present inventors have found that the combination of these two effects which vary differently along the length of the tool means that measuring the positional difference between the longest and shortest teeth does not always provide an accurate TIR.

The present invention mitigates at least some of the disadvantages of the prior art techniques and provides a more reliable TIR measurement.

According to a first aspect of the present invention there is provided a method of determining the runout of a tool retained by a rotatable spindle of a machine tool using a tool edge sensor mounted to the machine tool, the spindle being arranged to rotate the tool about a spindle centre line, the method comprising the steps of;

    (i) rotating the spindle into three or more rotational orientations,
    (ii) using the tool edge sensor to measure a position of the edge of the tool in the coordinate system of the machine tool for each of the three or more rotational orientations,
    (iii) determining a tool centre point by fitting the positions of the tool edge measured in step (ii) to a function, and
    (iv) using a difference in position between the tool centre point determined in step (iii) and the spindle centre line to determine a runout of the tool.

In this first aspect, the present invention provides a method of using a tool edge sensor (e.g. a break-beam laser tool setting device) mounted to a machine tool to measure the runout of a tool (e.g. a fluted cutting tool) that is held in a rotatable spindle of the machine tool. The tool may be, for example, an elongate cutting tool (e.g. a drill, mill etc) having a central tool axis from which one or more cutting edges (e.g. cutting teeth) radially protrude. In use, the spindle rotates the tool about the so-called spindle axis or spindle centre line. The position of the spindle centre line is known in the machine coordinate system (e.g. it would be determined during machine tool calibration). Ideally, the elongate axis of the tool would be perfectly aligned with the spindle centre line (i.e. the axis of spindle rotation) but in practice runout (also termed eccentricity) arises when the spindle centre line does not coincide with the tool axis. This runout has the effect, for a cutting tool, of increasing the effective cutting diameter of the tool which may result in the removal of too much material from a workpiece or reduce the lifetime of the tool due to increased wear. The measurement of any runout is thus important for several reasons.

The method of the present invention comprises a step (i) of rotating the spindle to rotate the tool into three or more rotational orientations (i.e. orientational positions). A step (ii) is also performed of using the tool edge sensor to measure a position of the edge of the tool in each of the three or more rotational orientations. The tool edge sensor would preferably be calibrated, in a known manner, and the tool edge measurements are taken in the machine coordinate system. As explained in more detail below, the tool may be rotated (indexed) into each rotational orientation and the rotation stopped to allow the tool edge measurement of step (ii) at each such position or the tool edge measurements of step (ii) may be taken whilst the tool is rotating. It should be noted that the tool edge is the outermost surface of the tool. The tool edge may thus be a cutting edge, a non-cutting edge or any other surface of the tool. In the preferred embodiment described below, the spindle may be moved (e.g. translated) relative to the tool edge sensor by the machine tool in order to separately measure the position of the tool edge when the tool is in each of the three or more rotational orientations.

Step (iii) of the method comprises determining a tool centre point using the measurements of tool edge position that were taken in step (ii). This is done by fitting the edge positions measured for each of the rotational orientations to a function, taking the angular orientation of the tool into account. For example, the measured tool edge positions may be fitted to a circle and the centre of the circle determined. It should be noted that the edge positions are measured in the coordinate system of the machine tool comprising the spindle that rotates the tool (i.e. the measurements are made in the machine coordinate system). The fitting process used to find the tool centre point may comprise solving an equation as described below or it may use an iterative or numerical technique. As mentioned above, fitting the edge position measurements to a circle is preferable because it allows the centre of the circle (i.e. the tool centre point) to be readily determined.

The tool centre point established in step (iii) gives the location of the tool axis. The position of the spindle centre line is also known and the deviation of the tool centre point from the spindle axis can be used to provide a reliable measure of tool runout. Step (iv) of the method thus uses a difference in position between the tool centre point determined in step (iii) and the spindle centre line to determine a runout (i.e. a total indicated runout or TIR) of the tool.

Importantly, knowing the location of the tool centre point relative to the spindle centre line means that runout can be calculated in step (iv) without the error that has been found to be associated with the above described prior art methods of measuring runout from the difference between maximum and minimum radial deflections of the tool (e.g. the difference in radial position of the longest and shortest teeth of a cutting tool). The above described disadvantages of the prior art runout measurement techniques (i.e. not being able to separate out the effect of the tool runout from any changes due to the circumferential position of the teeth varying along the length of the tool) are thus overcome using the method of the present invention. A more reliable runout measurement is thus provided that can be used for all types of tool. It should be noted that the step of determining tool runout may comprise providing a runout value (e.g. for use in a subsequent machining processes) or checking whether the amount of runout is within an acceptable range.

As mentioned above, the measurements of step (ii) may be taken when the tool is not rotating. Step (i) may thus comprising indexing (stepping) the cutting tool into the three or more rotational orientations. Alternatively, the tool edge measurements may be collected at each desired rotational position when the tool is still rotating. Step (i) may thus comprise continuously rotating the cutting tool and the measurements of step (ii) may be taken in the three or more rotational orientations whilst the tool is rotating. It should be noted that there will be other motion of the tool during measurement, even if it is not being rotated. For example, the tool may be translated into the light beam of a non-contact tool setter to measure a position of the tool edge.

The tool centre point may be found in step (iii) by fitting the measured positions of the edge of the tool to any function. The function may describe the shape of the tool. Advantageous, the function may comprise a circle. Step (iii) may thus comprise fitting the three or more measured positions of the tool edge to a circle to find the centre of the circle, the centre of the circle defining the tool centre point. Although not essential, a circle is typically preferred for simplicity of analysis. Furthermore, most cutting tools are typically made using a grinding process and hence it is a good assumption that they are highly symmetrical. For example, the cutting teeth of a cutting tool each tend to protrude by the same distance from the tool axis.

Step (iv) may comprise using the vector difference in the position of the tool centre point and the position of the spindle centre line to calculate runout. Step (iv) may comprise determining the runout of the tool at one position (i.e. in one plane) along the length of the tool. Alternatively, step (iv) may comprise determining the runout of the tool at a plurality of positions along the length of tool. In a preferred embodiment, the tool centre point may be found at a plurality of different positions (planes) along the length of the tool. Such a plurality of tool centre points can be used to determine a tool axis (i.e. a tool centre line). Knowing the tool centre line and the spindle centre line allows the runout to be determined at any position along the length of the tool. In other words, the angular runout can be measured. This also allows, for example, the runout at the tool tip to be determined using measurements that are taken further up the tool.

The method of the present invention may be performed on any tool. The tool is preferably a cutting tool. The cutting tool may have a plurality of teeth. The cutting tool may have an elongate axis that coincides with the tool centre point and each of the plurality of cutting teeth may nominally extend the same radial distance from the elongate axis of the tool. The cutting tool may have three or more cutting teeth. The tool may be a fluted cutting tool. The fluted cutting tool may comprise one or more cutting teeth (which can also be termed cutting edges). The fluted cutting tool may comprise two or more cutting teeth. The cutting teeth may be straight (e.g. one or more linear cutting edges may be provided along the length of the tool). Conveniently, the one or more cutting teeth may spiral or twist along the cutting tool. A helical tooth profile may be provided. The nominal profile of the cutting teeth may be known.

As mentioned above, the (e.g. fluted) cutting tool may comprise a plurality of cutting teeth. The cutting tool may comprise three or more cutting teeth. The cutting tool may comprise four or more cutting teeth. Advantageously, the plurality of cutting teeth are equally spaced apart from each other around the tool circumference. Alternatively, an asymmetrical arrangement of cutting teeth may be provided. The cutting tool may have an elongate axis (i.e. a tool axis or tool centre line); the elongate axis passes through the tool centre point. Each of the plurality of cutting teeth may nominally extend the same radial distance from the elongate (tool) axis of the tool. In other words, all the teeth of the cutting tool may have the same height

If a plurality of cutting teeth are provided on the tool, such cutting teeth are preferably each spaced apart by a first angular separation. In other words, there may be a regular and known circumferential spacing between the teeth (e.g. three teeth may be separated by 120° from each other, four teeth by 90° etc.). The rotational orientations/positions of step (ii) may then be spaced apart by a second angular separation. At least three rotational positions are used for step (ii). The number of rotational positions may be set based on the number of cutting teeth. The first and second angular separations may be set so that the measurements of step (ii) can be taken from any initial angular orientation of the cutting tool. Advantageously, the second angular separation is a factor of the first angular separation. So, for example, if a tooth is provided with four teeth separated from each other by 90° the rotational positions where the tool is measured may be separated by 90°, 45°, 30°, 18°, 15°, 10°, 9°, 6°, 5°, 3°, 2° or 1°. This ensures that measurements are taken at the same point(s) on each tooth, irrespective of the initial angle of the cutting tool. The measured circle centre position can then be reliably found using only a small number of measurements (e.g. four in the case of a four-tooth cutter), although a larger number of measurements may be used if an increased measurement accuracy is desired.

It should also be noted that the method may also be applied to tools with irregularly spaced teeth, although a larger number of measurements may be required to obtain a desired measurement accuracy. The number of rotational orientations of step (ii) may be selected based on the number of cutting teeth. For example, the tool may comprise a plurality of cutting teeth that are substantially equally spaced apart from each other around the tool circumference. The three or more rotational orientations of step (ii) may also be substantially equally spaced apart from each other around the tool circumference. In this case, the number of rotational orientations conveniently share a common factor with the number of cutting teeth, the common factor being an integer greater than one. In this manner, the same position(s) on each tooth will be measured irrespective of the initial angular orientation of the tool.

The measurement of step (ii) may be taken in a plane substantially normal to the axis of tool rotation (i.e. the spindle centre line). Advantageously, the tool edge sensor comprises a non-contact tool measurement device. For example, it may comprise a break-beam non-contact tool measurement device (such as the NC4 tool measurement system mentioned above). The non-contact tool measurement device may measure obscuration of a light beam by a tool. Step (ii) may comprise using the machine tool to move the spindle relative to the tool edge sensor (e.g. the non-contact tool measurement device). The non-contact tool measurement device may output a trigger signal when a light intensity threshold is crossed. The non-contact tool measurement device may output an intensity signal that varies in relation to the received light intensity. The tool edge sensor may comprise a one-dimensional sensor. The sensor may be a contact or a non-contact sensor. A contact tool setter may also be used to engage the tool from a radial direction and trace a path around the tool circumference as the tool is rotated to provide the tool edge position measurements.

The method is performed with the tool held in the spindle of a machine tool (e.g. a lathe, milling machine, drilling machine or the like). The machine tool may be a computer numerically controlled (CNC) machine tool. The machine tool may include motorised axes (e.g. to translate the spindle along one or more axes). The spindle of the machine tool may be motorised to drive tool rotation. The spindle may also be encoded so that the angle of rotation of the spindle (and tool) can be measured. The tool edge sensor may be mounted to a moving or stationary part of the machine tool. For example, the tool edge sensor may be mounted to the bed or table on which a workpiece to be machined can also be located.

According to a second aspect of the present invention, there is provided a tool sensing apparatus for measuring the runout of a tool held in a spindle of a machine tool, the spindle being arranged to rotate the tool about a spindle centre line, the apparatus comprising a tool edge sensor adapted to be mounted to the machine tool for measuring a position of the edge of the tool in the coordinate system of the machine tool at each of three or more rotational orientations and a processor for fitting the measured positions of the edge of the tool to a function to determine a tool centre point, a runout of the tool being determined from a difference in position between the tool centre point and the spindle centre line.

Also described herein is a method for measuring the runout of a cutting tool retained by a rotatable spindle of a machine tool, the spindle being arranged to rotate the cutting tool about a spindle centre line, the method comprising the steps of; (a) measuring a position of an edge of the tool at three or more circumferential positions around the tool, (b) calculating a tool centre point from the positions of the tool edge measured in step (a), and (c) using the deviation of the tool centre point calculated in step (b) from the spindle centre line to determine a runout of the tool. Step (a) may comprise rotating the spindle into three or more rotational orientations and measuring a position of an edge of the tool in each of the three or more rotational orientations. Alternatively, step (a) may comprise using a contact tool-setter having a sensing tip and bringing the tool into contact with the sensing tip from three or more different directions. This allows runout of a non-rotating tool to be measured and is thus advantageous for machine tools that do not include a means to measure the angular orientation of the spindle. Providing multiple non-contact tool setter devices in different orientations, or allowing re-orientation of a single non-contact tool setter device, can also be used to avoid the need to rotate the tool.

Also described herein is a tool sensing apparatus for measuring the runout of a fluted cutting tool held in a spindle, the apparatus comprising a tool edge sensor for measuring a position of the edge of cutting tool at each of three or more rotational positions and a processor for fitting the measured positions of the edge of the tool to a function to thereby determine the runout of the tool. Any of the features described in connection with the associated method described above may be implemented by the apparatus.

Also described herein is a method of measuring tool runout of a fluted cutting tool retained by a rotatable spindle. The method comprises measuring, at two more positions along the length of the cutting tool, a first tool position when what appears to be the longest tooth is detected and a second tool position when what appears to be the shortest tooth is detected. In other words, maximum and minimum tool diameters are measured as per the prior art. However, such measurements are taken at a plurality of positions along the length of the tool. The variation in the maximum and minimum tool diameters for different tool lengths allows the effect of runout to be separated from the effect of the spiral tooth profile of the cutting tool. Tool runout can thus be extracted.

Also described herein is a method of using a tool edge sensor to determine the runout of a fluted cutting tool retained by a rotatable spindle, the method comprising the steps of; (a) rotating the spindle into three or more rotational positions, (b) using the tool edge sensor to measure a position of the edge of the tool at each of the three or more rotational positions, and (c) fitting the measured positions of the edge of the tool to a function to thereby determine the runout of the tool.

The method will now be described, by way of example only, with reference to the accompanying drawings in which:

Figure 1 shows a break-beam non-contact tool measurement device and a two-tooth cutting tool,

Figures 2a-2c shows the effect of runout on the rotation of the tool of figure 1,

Figures 3a-3b further illustrate the runout effect,

Figures 4a-4b show the spiral flutes that extend along the tool,

Figures 5a and 5b show the measured inner and outer radii at two lengths along the tool,

Figure 6 shows the inner and outer tool radius values,

Figure 7 shows slices indicating the inner and outer tool radius values for different positions along the length of the tool,

Figures 8a-c show measured properties of the tool as function of position along the tool length,

Figures 9a-b show measurements taken on a tool that confirm the theoretical analysis of figure 1-8,

Figures 10a-c show a similar analysis to figures 8a-8c but for a three-tooth cutter,

Figures 11a-c show a similar analysis to figures 10a-10c but for a four-tooth cutter,

Figures 12a-b are experimental data taken for three and four tooth cutters as shown in figures 12c-12d,

Figure 13 shows the runout error for a two-flute cutter,

Figure 14 shows the runout error for a three-flute cutter,

Figure 15 shows the runout error for a four-flute cutter,

Figure 16 shows the radii that would be measured for the four teeth of a four-tooth cutter for a given runout,

Figure 17 shows the establishment of an input matrix,

Figure 18 shows summing the elements,

Figure 19 shows the Laplace method to calculate the determinant and inverse the matrix,

Figure 20 shows solving for $x_0$ and $y_0$,

Figure 21 compares the TIR measured using the improved and prior methods,

Figures 22c-22d show an experiment based on the theory outlined above,

Figures 23a-23b show measured TIR versus reference values for three runouts at various positions along the length of a 0.07mm diameter drill,

Figures 24a-24b show measured TIR versus reference values for three runouts at various positions along the length of a 0.05mm diameter drill, and

Figure 25 shows the measured difference in runout for multiple measurements taken at different distances from the tool tip and with different angular increments between the tool diameter measurements.

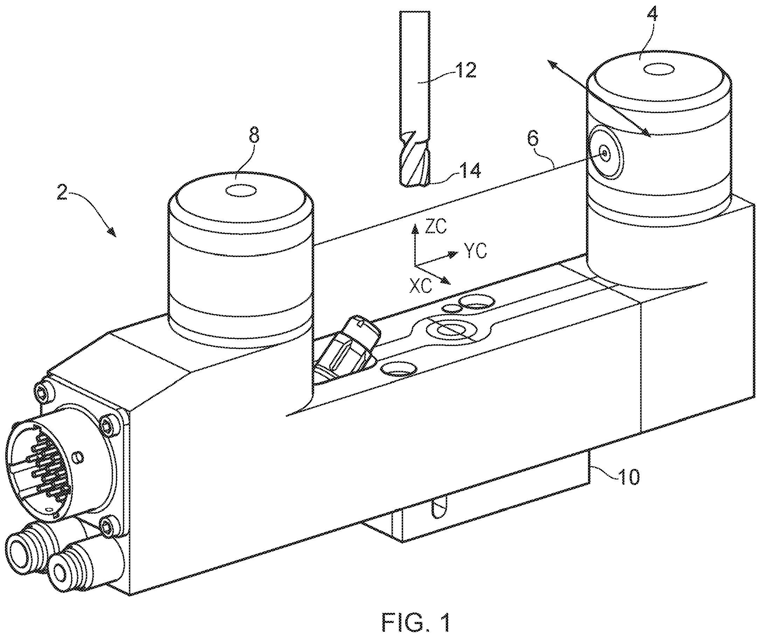

Referring to figure 1, a non-contact tool measurement device 2 is illustrated. The device comprises a transmitter module 4 comprising a laser for generating a beam of light 6. The light beam 6 is passed to a receiver module 8 that comprises a photodetector for detecting the intensity of received light. The transmitter and receiver modules are both affixed to a common base 10 that can be mounted to the bed, or indeed any appropriate part, of a machine tool. Although not shown, the non-contact tool measurement device 2 is, when installed, connected to a machine tool via an interface in a known manner.

In use, the amount of light received by the receiver module 8 is measured. If a tool is placed in the light beam 6 the amount of light that reaches the receiver module will decrease (i.e. because the beam is obscured). The received light intensity is continually compared to a threshold and a so-called trigger signal is issued when the threshold is crossed due to a tool moving into or out of the light beam. This trigger signal is passed to the SKIP input of the controller of an associated machine tool and the position of the tool, as measured by the machine tool, is captured on receipt of the trigger signal. This allows tool size measurements (e.g. tool length or diameter) to be made.

It will now be described with reference to figures 1 to 15 how the prior art technique for measuring cutting tool runout using a non-contact tool measurement device is prone to errors.

Referring again to figure 1, a fluted cutting tool 12 is shown (noting the spindle in which the tool 12 is held is not shown). The cutting tool 12 (which may also be termed a cutter) is shown aligned perfectly to the zc axis, which is orthogonal to the yc axis to which the light beam 6 is parallel. The tip of the cutting tool 12 has two cutting edges or teeth and the cutting tool 12 is rotationally orientated so that the cutting tooth 14 at the tip of the tool 12 is perpendicular to the light beam 6 (i.e. it projects in the xc direction). It is also assumed that the cutting tool 12 is perfectly straight and that both of the cutting edges have the same radial height or length (i.e. both teeth extend radially by the same distance from the tool centre line).

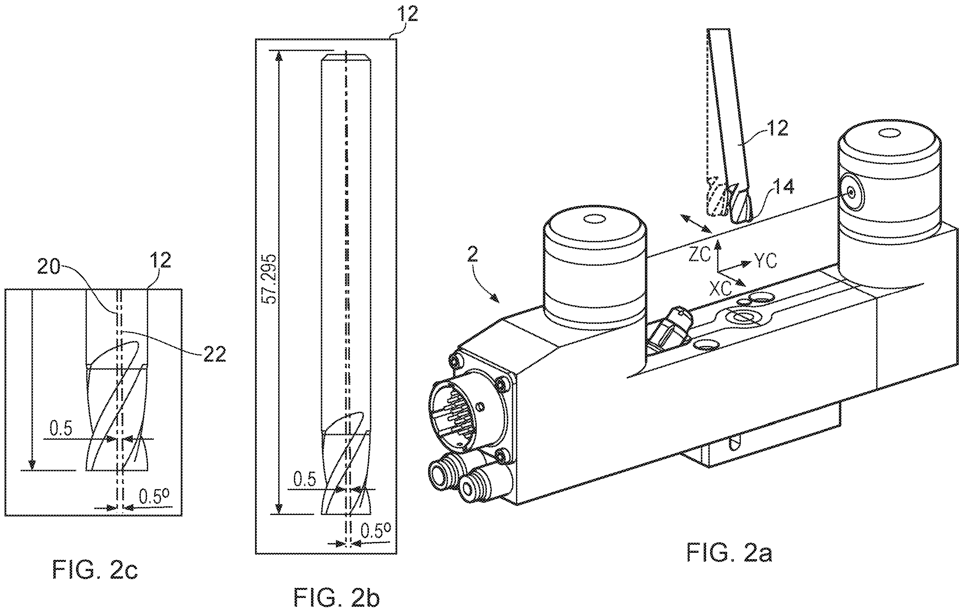

Figure 2a shows the effect of introducing runout. In particular, consider the case when the tool tip is pivoted (rotated) relative to the spindle centre line along the vector xc by 0.5° (noting the drawings shows a much larger amount of tilting for illustration purposes). The axis of the pivoting motion is assumed to be 57.295mm above the laser beam and hence there is a TIR of 1.0mm at the tool tip. Figures 2b and 2c show in more detail how this causes the spindle axis 20 (i.e. the axis about which the spindle rotates which is also often termed the spindle centre line) to deviate from the tool axis 22 (i.e. the central axis of the elongate tool).

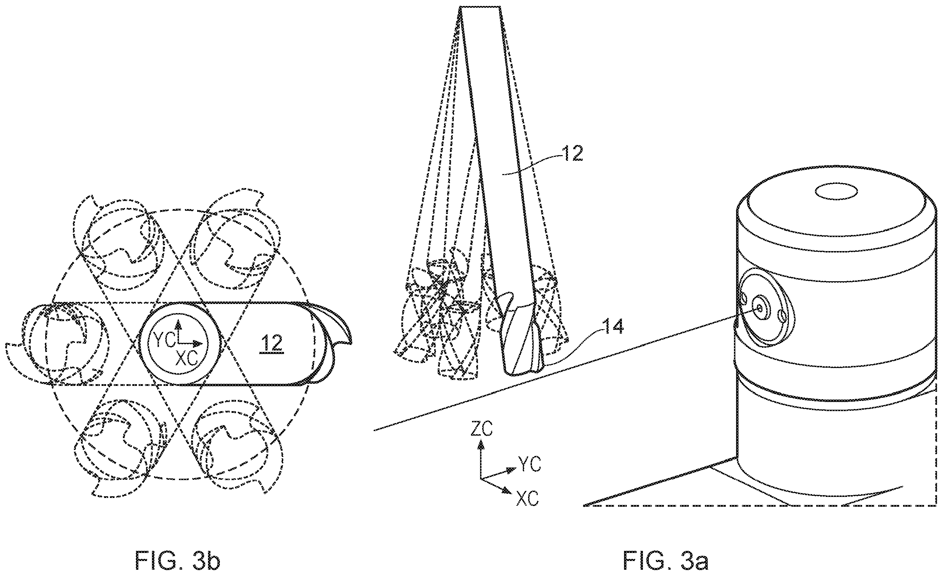

Figure 3a shows the motion of the tool tip when the spindle holding the tool is rotated (again this is exaggerated for illustration purposes). This runout of the tool tip would, in use, mean the tool cuts a larger diameter hole than its physical size. Figure 3b shows a top-down view of the same effect.

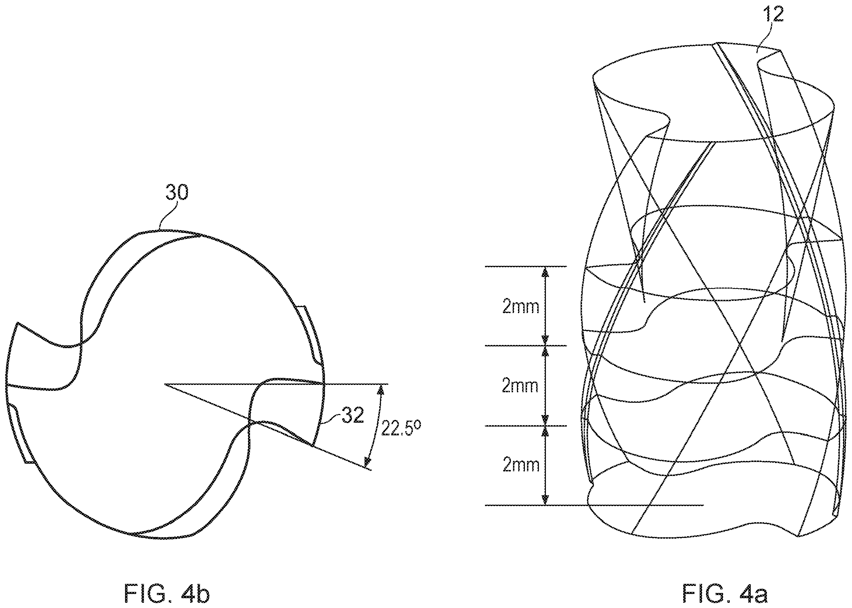

Referring to figures 4a-b, the effect of the helical profile of the cutting edges will now be considered. As explained above, consider the case where the tool tip 12 is arranged so that the tooth 14 projects along the xc direction. Further up the tool, the helical profile of the cutting edge means that the tooth 14 would no longer project outwardly in the xc direction. In the present example, the cutting tool has a helix that completes a full revolution every 32mm. If slices are considered at 2mm intervals up from the tip of the tool, then each slice shifts by 22.5°. Figure 4a shows such slices from the side of the tool and figure 4b shows a first slice 30 at the tip and second slice 32 at a point 2mm up from the tip.

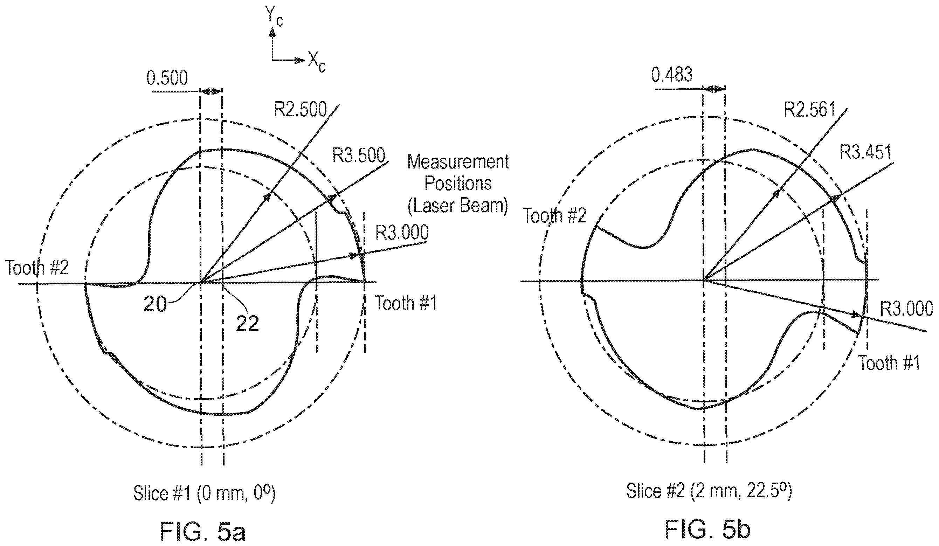

Figures 5a and 5b illustrate the effect of the change in angle of the tool cutting edge between the first and second slices on the position of the tool edge as measured by the tool measurement device.

Figure 5a shows the first slice in which the spindle axis 20 and the tool axis 22 are separated by 0.5mm when the first tooth 14 of the cutting tool extends along the xc direction. The effect of runout is thus to make the first tooth 14 appear 0.5mm "longer" (i.e. it extends further in the xc direction) than it physically is. So, for a 3mm radius tool, the first tooth would be measured as being 3.5mm long. Similarly, the second tooth of that cutting tool would be measured to be 0.5mm shorter than it is. The second tooth would thus be measured as being 2.5mm long. The difference in the measured tooth length (noting tooth length is used herein as shorthand to refer to the extent to which a tooth extends radially) is thus 1.0mm which equates to the amount of runout.

Figure 5b, however, shows the situation when tool measurements are taken at the second slice (i.e. 0.2mm up from the tip). The effect of the helical rotation of the cutting teeth means that they no longer project along the xc direction when the spindle axis 20 and the tool axis 22 are separated by 0.5mm. Instead, there is a reduced impact of runout due to the additional 22.5° rotation required for the cutting teeth to extend along the xc direction. In particular, the spindle axis 20 and the tool axis 22 are separated in the xc direction by only 0.483mm for this second slice. This results in the maximum and minimum tooth length being measured as 3.451mm and 2.561mm respectively. It can thus be seen that the difference in tool length is now less than the 1.0mm runout that is present.

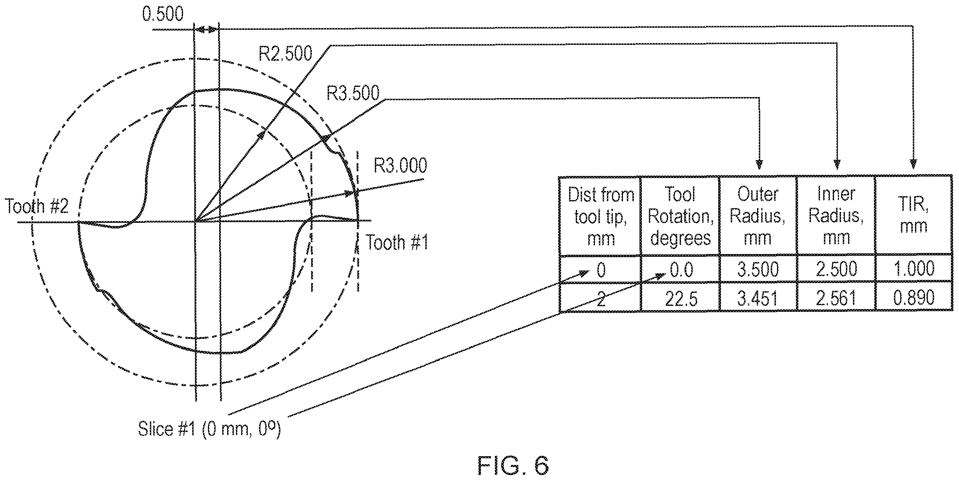

Figure 6 summarizes the inner/outer radii and TIR for the first and second slices.

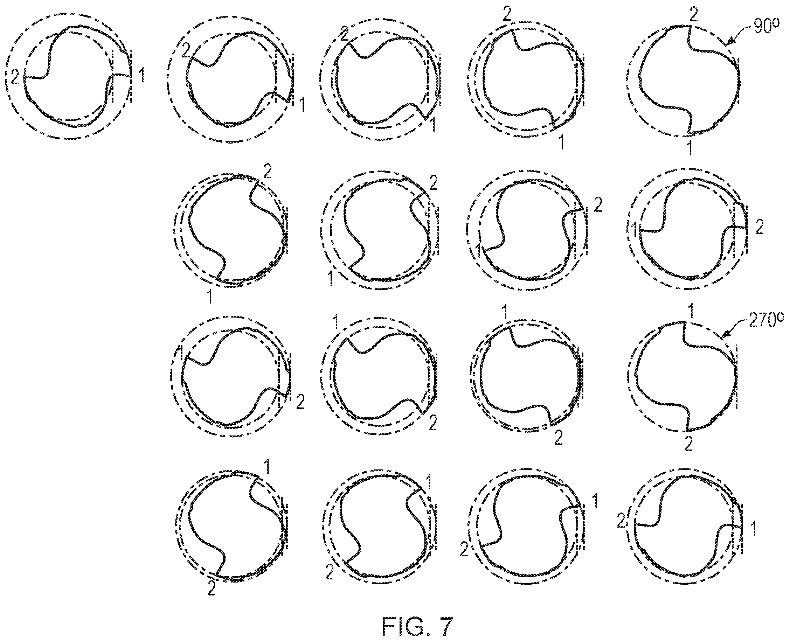

Figure 7 shows similar diagrams to those of figures 5a and 5b for each of the slices taken at 22.5° intervals along the 32mm of the tool. The top-left diagram shows the first slice (i.e. at the tip) and the subsequent slices are sequentially presented from left to right from the top to bottom row. It should be noted that no runout is measured at all for the fifth and thirteenth slices (i.e. 90° and 270°) because the spindle axis and tool axis are both located at the same position along the xc axis (i.e. the eccentricity only causes a difference in the yc direction) and hence the effect is not seen by the tool measurement device which is insensitive to positional variations along the laser beam (i.e. in the yc direction).

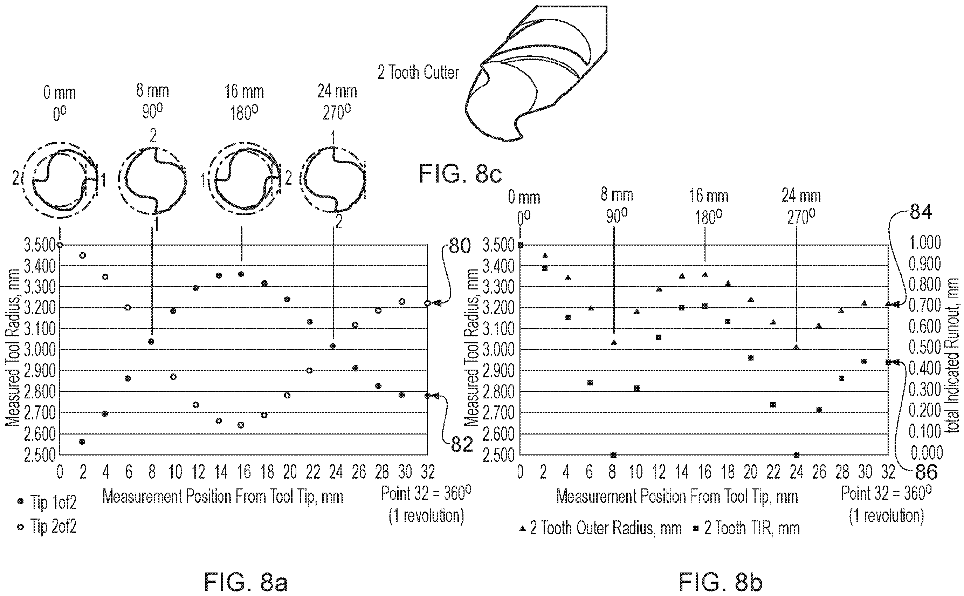

Figure 8a shows the measured radius of the two tool tips for each of the slices mentioned above. Points 80 show the measured radius of the first cutting tooth 14 and the points 82 show the measured radius of the second cutting tooth. Figure 8b shows the outer radius of the tool (points 84) and the measured TIR (points 86). It can thus be seen that variations in TIR arise based on the location of the radius measurements along the length of the cutting tool.

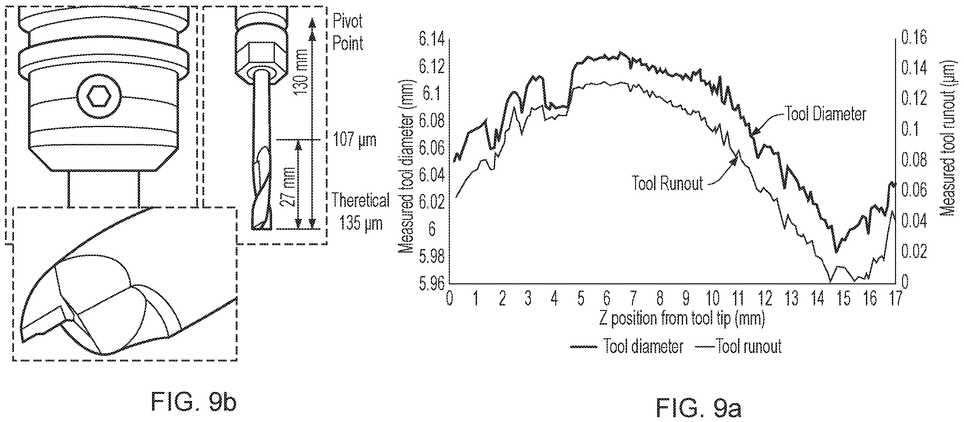

Figures 9a and 9b show how such errors occur when measuring a tool. Figure 9b shows a 6mm diameter, two flute end mill mounted to a Nikken zero fit tool holder. The pivot point of the tool holder is 130mm from the tool tip. The runout of the shank above the cutting flutes (27mm from the tool tip) was measured using a LVDT with 0.1μm resolution. The tool holder was set to provide a runout of 107μm (as measured by the LVDT) and the tool diameter and tool runout was then measured using the non-contact tool measurement device 2 as described above. The variation in measured tool diameter and tool runout are plotted in figure 9a. It can be seen that, like the theoretical models, measured runout varies with the position from the tool tip.

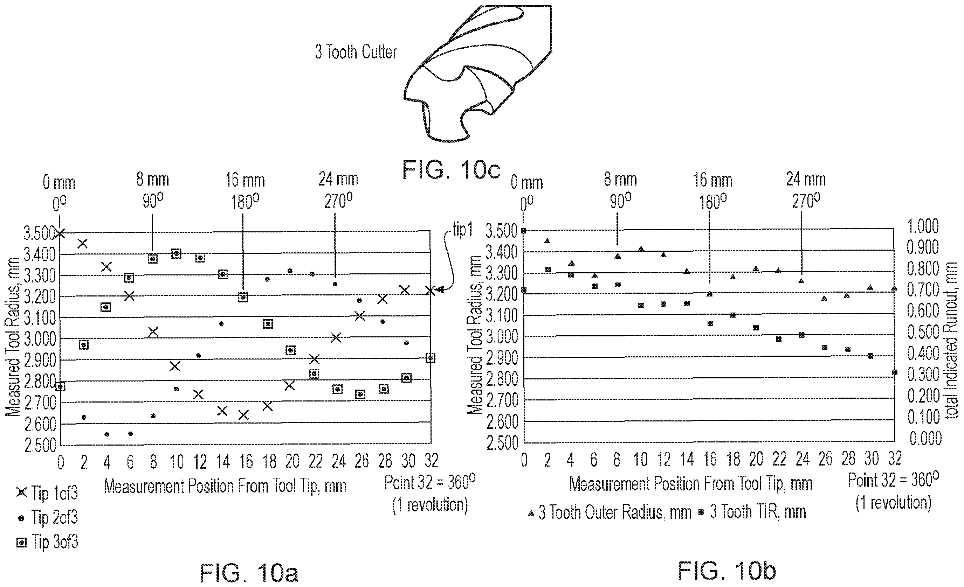

Figures 10a and 10b show a similar effect occurs in three tooth cutting tools. Figure 10a shows the measured radius of each cutting tooth and figure 10b shows the measured outer radius and the TIR.

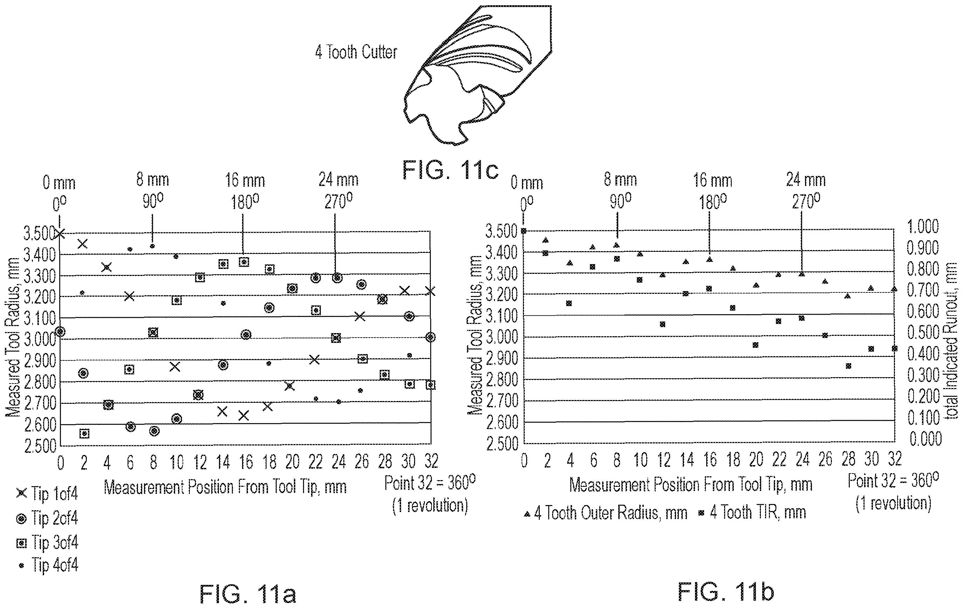

Figures 11a and 11b show a similar effect occurs in four tooth cutters. Figure 11a shows the measured radius of each cutting tooth and figure 11b shows the measured outer radius and the TIR.

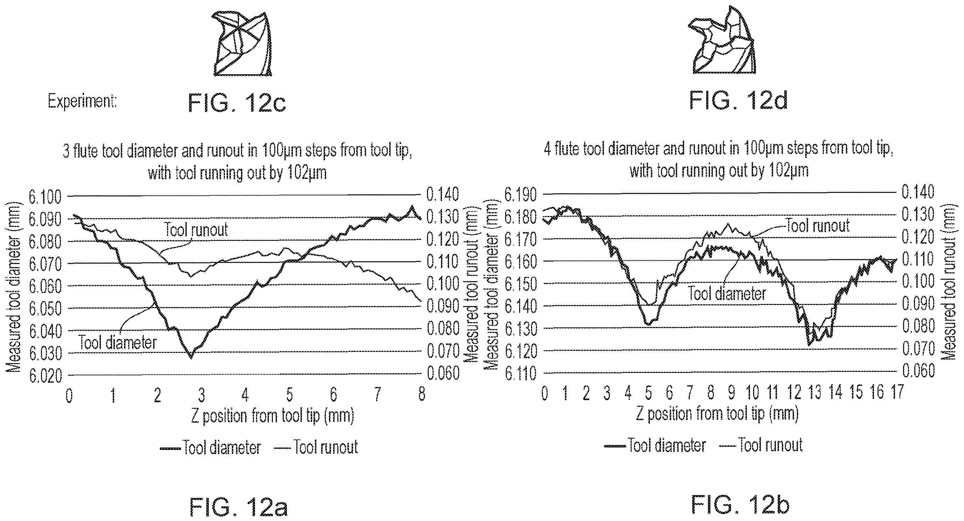

Figures 12a and 12b support the models of figures 10 and 11 with experimental measurements. It should be noted from figure 12a that the runout change does not follow the measured diameter change for a three-tooth cutting tool, but that it does for the four tooth tool as shown in figure 12b.

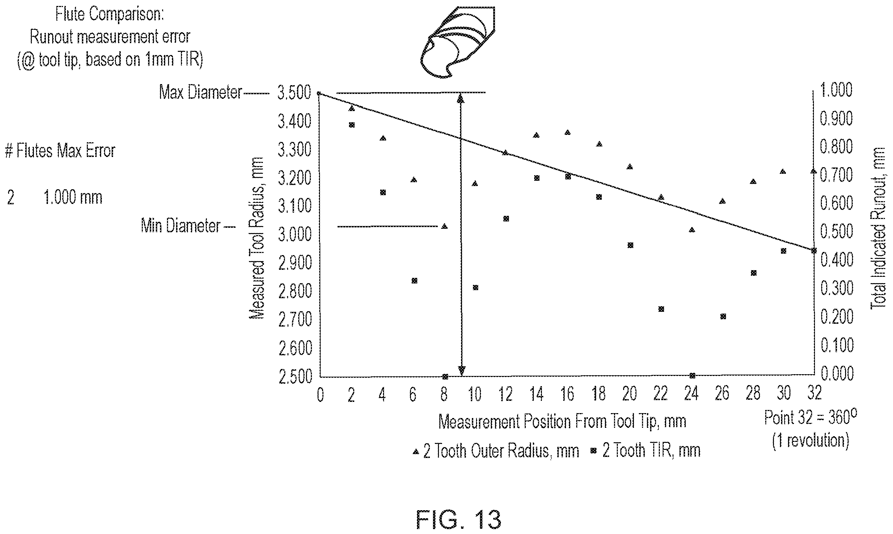

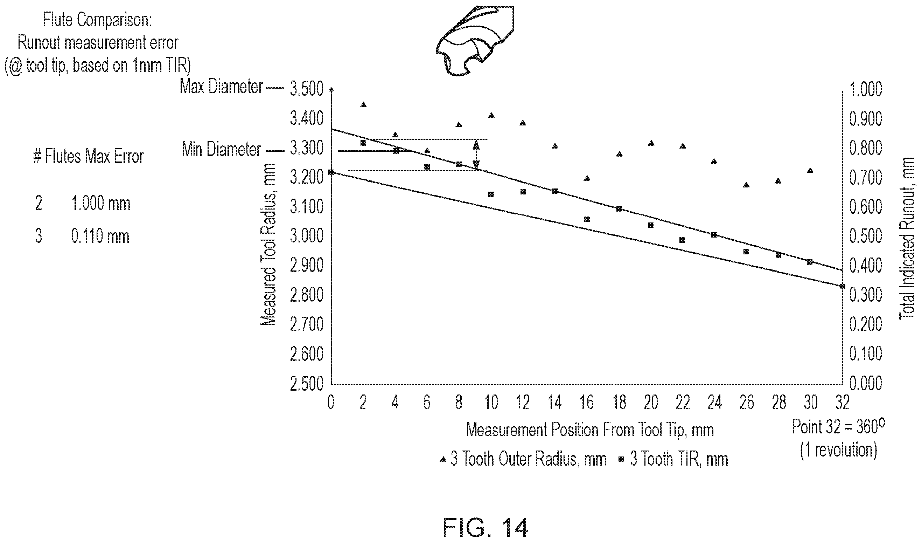

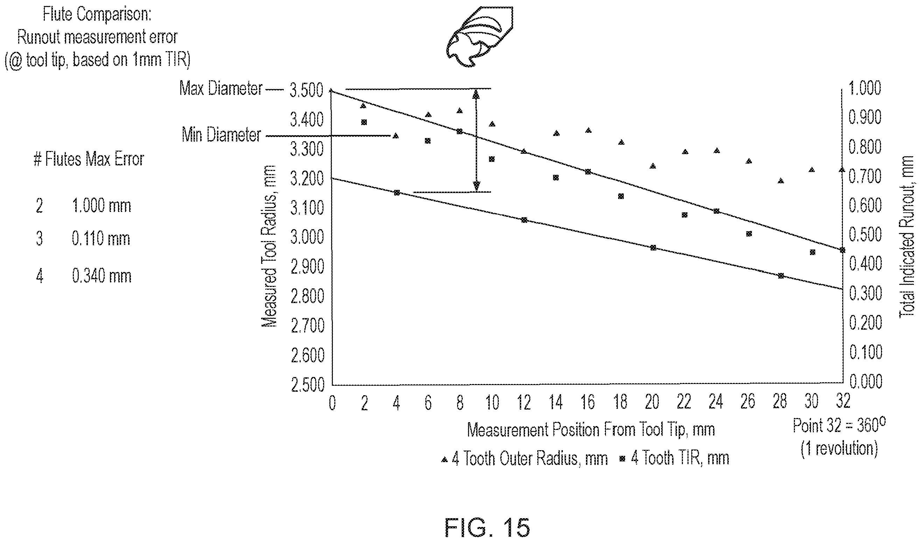

Referring now to figure 13, it can be seen that the maximum possible error that might arise when measuring a two tooth cutter is 1.0mm. Figure 14 shows that the maximum possible error that might arise when measuring a three tooth cutter is 0.110mm and figure 15 shows that the maximum error for a four tooth cutter is 0.340mm. This is all based on there actually being a TIR of 1.0mm.

Prior art techniques measure the tool runout and diameter at a fixed height up the tool, which means that accurate results cannot be guaranteed. In the worst case, the smallest diameter will be measured and TIR will read zero, however the tool will still cut the larger diameter further up the flutes. If a single full depth 8mm ledge cut was made, the edge of the ledge would not be straight (e.g. it would be wavy and/or have a form error).

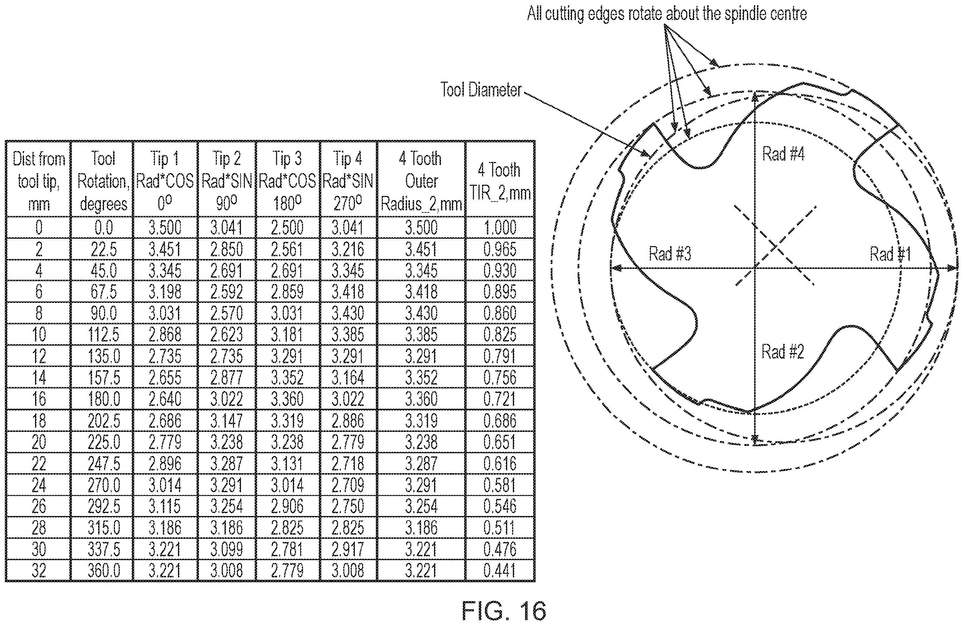

Referring now to figures 16 to 25, a technique for measuring runout in accordance with the present invention will be described that overcomes at least some of the disadvantages of the techniques described above.

It will now be described how tool runout can be derived from measuring each individual cutting edge and then computing the average tool centre point for a four-tooth cutting tool.

Figure 16 illustrates the radial position of each cutting tip from the spindle centre line for multiple slices along the length of the cutting tool. It is assumed that each tooth extends the same distance from the tool centre and the angular spacing of the teeth is equal.

The maths to determine the centre point of a 2D circle is then considered. In particular, an arbitrary number of X & Y tool measurement 'skip' values are taken that describe the measured position of the tool edge in the machine coordinate system. These are converted, using the known angular orientation of the spindle when each measurement was collected, into polar coordinates that describe the angle and radius of each point relative to the spindle centre line. These polar coordinates are then transformed back into a Cartesian coordinate system and fitted to a circle. The method applies a best fit circle to the point cloud data such that the fitted circle centre point, given in X & Y co-ordinates relative to the spindle centre line, can be derived. The radius, or runout, can then be calculated for a specific measurement position along the tool (programmed from the tip).

The aim of the function is to find x0 & y0 and r where;

$$\sum_{i-1}^{n}((x_i - x_0)^2 + (y_i - y_0)^2 - r^2)^2 = min \qquad (1)$$

This is done by solving an equation in x0, y0 where xi and yi are the given points.

An input matrix (2x2) and a known vector (1x2) are required to solve the equation. For demonstration purposes a four fluted tool with 0.5 mm runout will be used, as shown in figure 16.

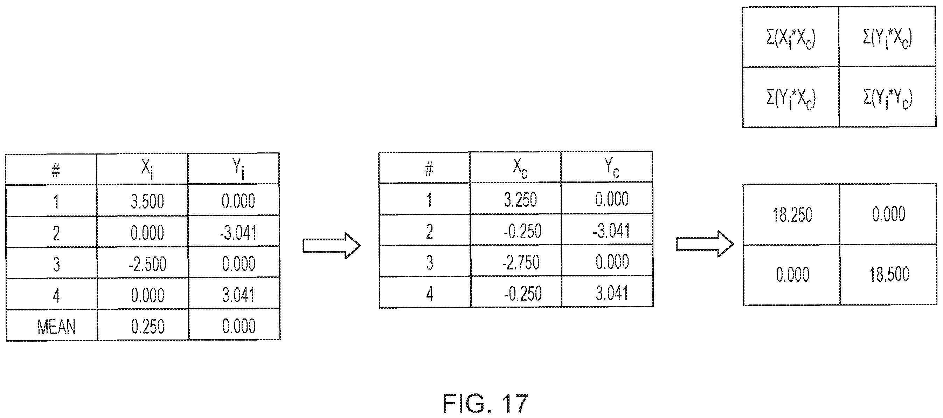

Referring to figure 17, an input matrix is defined. In particular, the following steps are performed:

- The point cloud data are tabulated into two X & Y coordinate arrays, xi, yi.
- The mean of xi, yi, are subtracted from xi, yi respectively, to create a new xc, yc array.
- Each of the six arrays are cross-multiplied and the elements summed for each array.

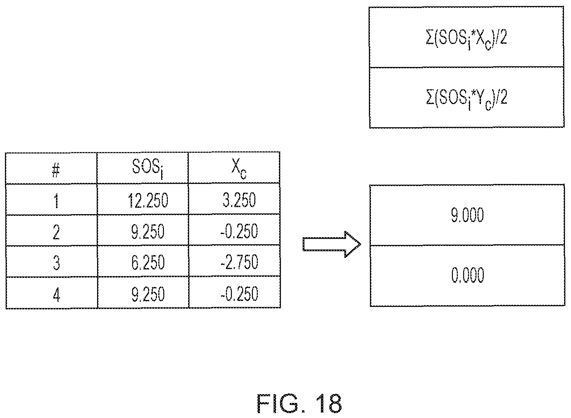

Referring to figure 18, the Sum of Squares is calculated and then cross-multiplied with the other array set and then summed.

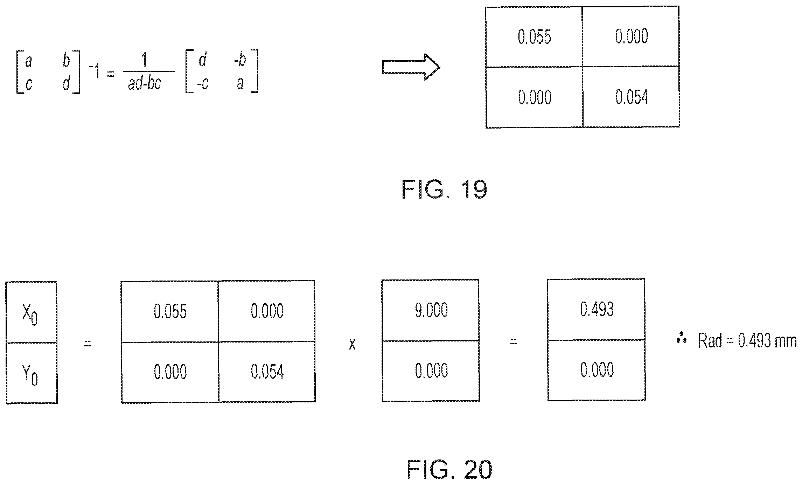

The Laplace method is then used to calculate the determinant and inverse the matrix as shown in figure 19, before the matrix is multiplied by the vector to solve for x0, y0 as per figure 20. It should be noted that alternative mathematical techniques could be used to fit the data points to a circle. It would, of course, also be possible to use a different coordinate system.

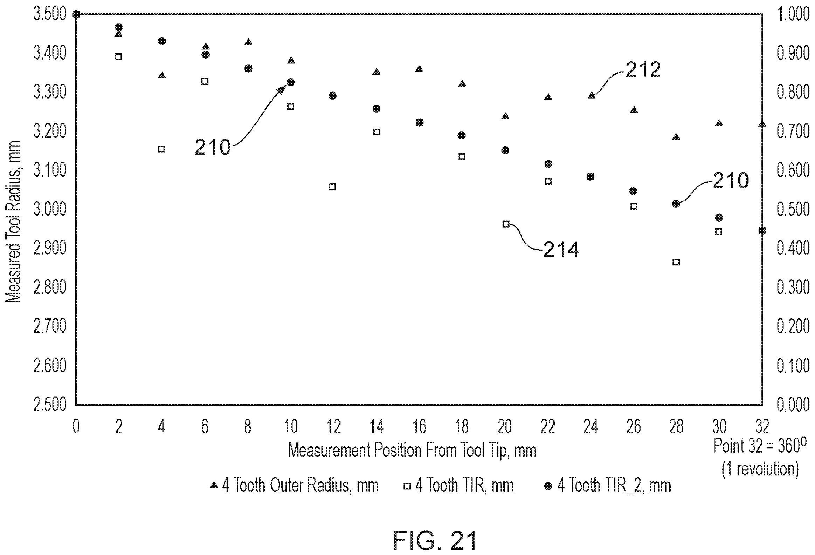

Figure 21 shows the TIR values 210 calculated using the method of the present invention. These are seen to be more predictable and reliable than the prior art TIR measurements 214 and outer radius measurements 212.

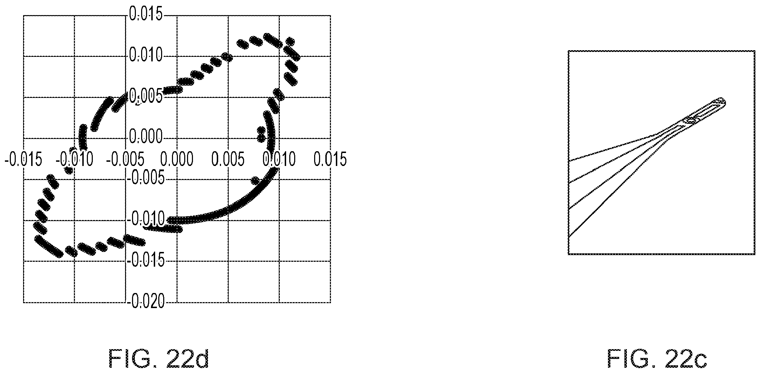

Figures 22c-22d show experimental data collected to demonstrate the method of the present invention. In particular, an experiment was performed using two micro drills of diameters of 0.07mm and 0.05mm. Each drill bit had two flutes that spiralled up the tool in a helical manner. Each drill was mounted to a Nikken zero fit tool holder to enable runout to be adjusted. Figure 22d shows linear trigger positions of the tool of figure 22c translated into polar coordinates, noting the 0.001mm machine resolution.

Reference values of runout of the two drilling tools were measured on a camera based non-contact tool setter and compared with a laser based non-contact tool setter implementing the method of the present invention.

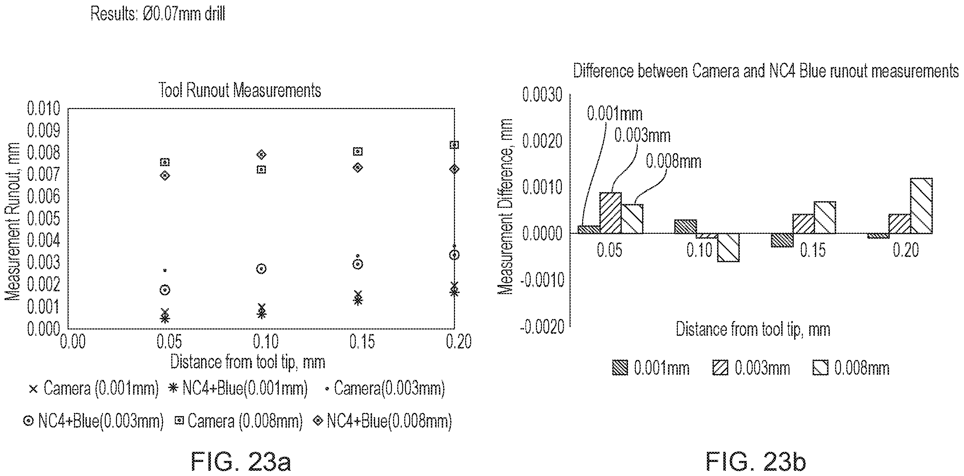

Figure 23a shows (for the 0.07mm diameter drill) a comparison of the runout measurements taken using the reference (camera based) non-contact tool setter and the laser based non-contact tool setter implementing the method of the present invention for three levels of runout (0.001mm, 0.003mm and 0.008mm) at different distances from the tool tip. Good correlation between the measurements is seen. Figure 23b plots the measurement differences for the three levels of runout (0.001mm, 0.003mm and 0.008mm) at the different distances from the tool tip.

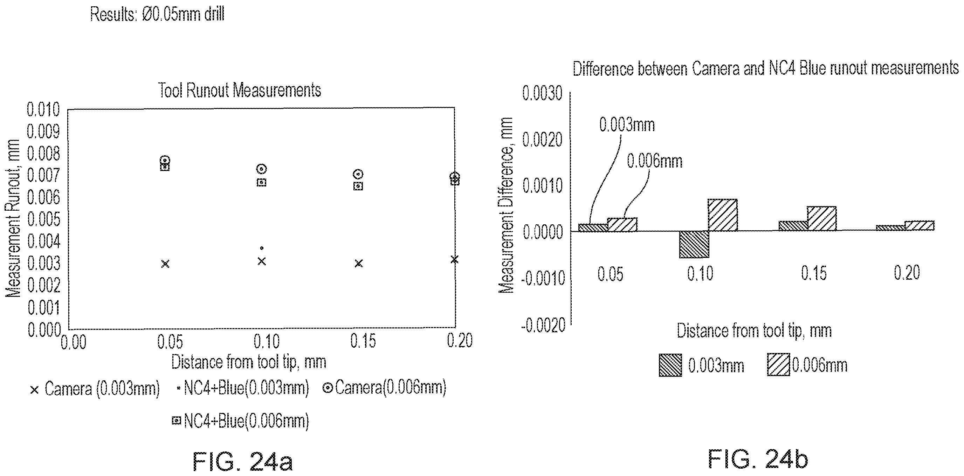

Figures 24a and 24b plot similar results for the 0.05mm diameter drill. Again, good correlation is observed.

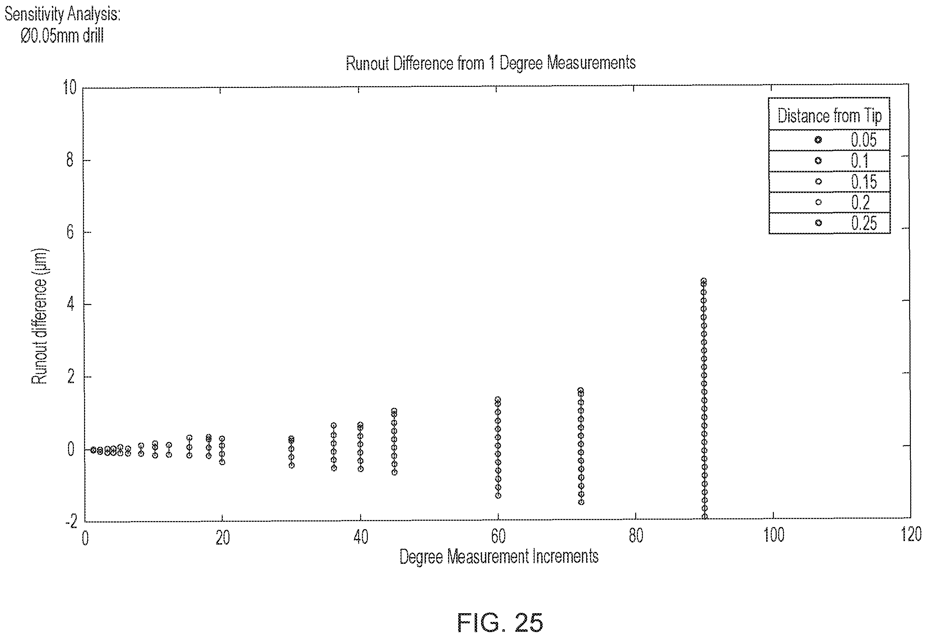

The TIR measurements in accordance with the present invention presented in figures 23 and 24 were taken using 360 data points (i.e. 1° increments) collected for each slice along the tool. Figure 25 shows the effect of the size of the measurement increments on the runout error when measuring a 0.05mm diameter drill. It is also possible to use far fewer points if the angular separation of such points is set taking into account the angular separation of the cutting teeth. For example, a minimum of three equally spaced points may be suitable for measuring a tool having three equally spaced cutting teeth.

Although the above described method uses rotation of the tool to measure points around the circumference of the tool, an alternative would be to use a contact tool setter (or a re-orientable non-contact tool setter) and to approach the centre of the contact tool setter stylus from three or more different angles, but with a non-rotating tool. For instance, a first measurement could be taken along the X-axis, a second measurement could be taken at 60° to the x-axis, the third at 120° etc until the three or more (e.g. six) equally spaced measurements of the tool edge had been taken.

The maths described above for tool rotation then remains the same and the measured tool edge positions can be fitted to a circle to establish the tool centre point.

It should again be noted that the above are merely examples of the present invention and should not be seen as limiting the scope of the present invention.

**Claims**

1. A method of determining the runout of a tool (12) retained by a rotatable spindle of a machine tool using a tool edge sensor (2) mounted to the machine tool, the spindle being arranged to rotate the tool about a spindle centre line (20), the method comprising the steps of;

   (i) rotating the spindle into three or more rotational orientations,
   (ii) using the tool edge sensor to measure a position of the edge of the tool (12) in the coordinate system of the machine tool for each of the three or more rotational orientations,
   (iii) determining a tool centre point by fitting the positions of the tool edge measured in step (ii) to a function, and
   (iv) using a difference in position between the tool centre point determined in step (iii) and the spindle centre line (20) to determine a runout of the tool.

2. A method according to claim 1, wherein step (i) comprises indexing the tool (12) into the three or more rotational orientations and the measurements of step (ii) are taken whilst the tool is not rotating.

3. A method according to claim 1, wherein step (i) comprises continuously rotating the tool (12) and the measurements of step (ii) are taken in the three or more rotational orientations whilst the tool is rotating.

4. A method according to any preceding claim, wherein step (iii) comprises fitting the three or more measured positions of the tool edge to a circle to find the centre of the circle, the centre of the circle defining the tool centre point.

5. A method according to any preceding claim, wherein step (iv) comprises determining the runout of the tool at a plurality of positions along the length of tool (12).

6. A method according to any preceding claim, wherein the tool (12) comprises a cutting tool having a plurality of cutting teeth (14).

7. A method according to any preceding claim, wherein the tool (12) comprises a cutting tool having three or more cutting teeth

8. A method according to any one of claims 6 to 7, wherein the cutting tool is a fluted cutting tool.

9. A method according to any one of claims 6 to 8, wherein the cutting tool has an elongate axis (22) that coincides with the tool centre point and each of the plurality of cutting teeth (14) nominally extend the same radial distance from the elongate axis of the tool.

10. A method according to any preceding claim, wherein the tool (12) is a cutting tool that comprises a plurality of cutting teeth that are substantially equally spaced apart from each other around the tool circumference, wherein the cutting teeth are each spaced apart by a first angular separation and the rotational orientations of step (ii) are spaced apart by a second angular separation, wherein the second angular separation is a factor of the first angular separation.

11. A method according to any preceding claim, wherein the tool (12) comprises a plurality of cutting teeth that are substantially equally spaced apart from each other around the tool circumference and the three or more rotational orientations are substantially equally spaced apart from each other around the tool circumference, wherein the number of rotational orientations shares a common factor with the number of cutting teeth, the common factor being an integer greater than one.

12. A method according to any preceding claim, wherein step (ii) comprises taking measurements of the tool edge in at least one plane substantially perpendicular to the axis of tool rotation.

13. A method according to any preceding claim, wherein the tool edge sensor (2) comprises a break-beam, non-contact tool measurement device and step (ii) comprises using the machine tool to move the spindle relative to the tool edge sensor.

14. A tool sensing apparatus for measuring the runout of a tool (12) held in a spindle of a machine tool, the spindle being arranged to rotate the tool about a spindle centre line, the apparatus comprising a tool edge sensor (2) adapted to be mounted to the machine tool for measuring a position of the edge of the tool in the coordinate system of the machine tool at each of three or more rotational orientations and a processor for fitting the measured positions of the edge of the tool (12) to a function to determine a tool centre point, a runout of the tool (12) being determined from a difference in position between the tool centre point and the spindle centre line.

**Patentansprüche**

1. Verfahren zum Bestimmen des Rundlaufs eines Werkzeugs (12), das von einer drehbaren Spindel einer Werkzeugmaschine gehalten wird, unter Verwendung eines Werkzeugkantensensors (2), der an der Werkzeugmaschine montiert ist, wobei die Spindel so angeordnet ist, dass sie das Werkzeug um eine Spindelmittellinie (20) dreht, wobei das Verfahren die Schritte umfasst:

   (i) Drehen der Spindel in drei oder mehr Drehausrichtungen,
   (ii) Verwenden des Werkzeugkantensensors, um eine Position der Kante des Werkzeugs (12) in dem Koordinatensystem der Werkzeugmaschine für jede der drei oder mehr Drehausrichtungen zu messen,
   (iii) Bestimmen eines Werkzeugmittelpunkts durch Anpassen der in Schritt (ii) gemessenen Positionen der Werkzeugkante an eine Funktion, und
   (iv) Verwenden einer Positionsdifferenz zwischen dem in Schritt (iii) bestimmten Werkzeugmittelpunkt und der Spindelmittellinie (20), um einen Rundlauf des Werkzeugs zu bestimmen.

2. Verfahren nach Anspruch 1, wobei Schritt (i) das Weiterdrehen des Werkzeugs (12) in die drei oder mehr Drehausrichtungen umfasst und die Messungen von Schritt (ii) vorgenommen werden, während sich das Werkzeug nicht dreht.

3. Verfahren nach Anspruch 1, wobei Schritt (i) das kontinuierliche Drehen des Werkzeugs (12) umfasst und die Messungen von Schritt (ii) in den drei oder mehr Drehausrichtungen vorgenommen werden, während sich das Werkzeug dreht.

4. Verfahren nach einem der vorhergehenden Ansprüche, wobei Schritt (iii) das Anpassen der drei oder mehr gemessenen Positionen der Werkzeugkante an einen Kreis umfasst, um den Mittelpunkt des Kreises zu finden, wobei der Mittelpunkt des Kreises den Werkzeugmittelpunkt definiert.

5. Verfahren nach einem der vorhergehenden Ansprüche, wobei Schritt (iv) das Bestimmen des Rundlaufs des Werkzeugs an einer Vielzahl von Positionen entlang der Länge des Werkzeugs (12) umfasst.

6. Verfahren nach einem der vorhergehenden Ansprüche, wobei das Werkzeug (12) ein Schneidwerkzeug mit einer Vielzahl von Schneidzähnen (14) umfasst.

7. Verfahren nach einem der vorhergehenden Ansprüche, wobei das Werkzeug (12) ein Schneidwerkzeug mit drei oder mehr Schneidzähnen umfasst.

8. Verfahren nach einem der Ansprüche 6 bis 7, wobei das Schneidwerkzeug ein genutetes Schneidwerkzeug ist.

9. Verfahren nach einem der Ansprüche 6 bis 8, wobei das Schneidwerkzeug eine Längsachse (22) aufweist, die mit dem Werkzeugmittelpunkt zusammenfällt, und sich jeder der Vielzahl von Schneidzähnen (14) nominell um den gleichen radialen Abstand von der Längsachse des Werkzeugs erstreckt.

10. Verfahren nach einem der vorhergehenden Ansprüche, wobei das Werkzeug (12) ein Schneidwerkzeug ist, das eine Vielzahl von Schneidzähnen umfasst, die im Wesentlichen gleichmäßig voneinander um den Werkzeugumfang beabstandet sind, wobei die Schneidzähne jeweils durch einen ersten Winkelabstand beabstandet sind und die Drehausrichtungen von Schritt (ii) durch einen zweiten Winkelabstand beabstandet sind, wobei der zweite Winkelabstand ein Faktor des ersten Winkelabstands ist.

11. Verfahren nach einem der vorhergehenden Ansprüche, wobei das Werkzeug (12) eine Vielzahl von Schneidzähnen umfasst, die im Wesentlichen gleichmäßig voneinander um den Werkzeugumfang beabstandet sind, und die drei oder mehr Drehausrichtungen im Wesentlichen gleichmäßig voneinander um den Werkzeugumfang beabstandet sind, wobei die Anzahl von Drehausrichtungen einen gemeinsamen Faktor mit der Anzahl von Schneidzähnen teilt, wobei der gemeinsame Faktor eine ganze Zahl größer als eins ist.

12. Verfahren nach einem der vorhergehenden Ansprüche, wobei Schritt (ii) das Vornehmen von Messungen der Werkzeugkante in mindestens einer Ebene im Wesentlichen senkrecht zu der Werkzeugdrehachse umfasst.

13. Verfahren nach einem der vorhergehenden Ansprüche, wobei der Werkzeugkantensensor (2) eine kontaktlose Werkzeug-Messvorrichtung mit Knickbalken umfasst und Schritt (ii) das Verwenden der Werkzeugmaschine umfasst, um die Spindel relativ zu dem Werkzeugkantensensor zu bewegen.

14. Werkzeugabtastvorrichtung zum Messen des Rundlaufs eines Werkzeugs (12), das in einer Spindel einer Werkzeugmaschine gehalten ist, wobei die Spindel angeordnet ist, um das Werkzeug um eine Spindelmittellinie zu drehen, wobei die Vorrichtung einen Werkzeugkantensensor (2), der angepasst ist, um an der Werkzeugmaschine montiert zu werden, um eine Position der Kante des Werkzeugs in dem Koordinatensystem der Werkzeugmaschine bei jeder von drei oder mehr Drehausrichtungen zu messen, und einen Prozessor zum Anpassen der gemessenen Positionen der Kante des Werkzeugs (12) an eine Funktion, um einen Werkzeugmittelpunkt zu bestimmen, umfasst, wobei ein Rundlauf des Werkzeugs (12) aus einer Positionsdifferenz zwischen dem Werkzeugmittelpunkt und der Spindelmittellinie bestimmt wird.

**Revendications**

1. Un procédé de détermination de l'excentricité d'un outil (12) retenu par une broche rotative d'une machine-outil à l'aide d'un capteur de bord d'outil (2) monté sur la machine-outil, la broche étant agencée pour faire tourner l'outil autour d'une ligne centrale de broche (20), le procédé comprenant les étapes consistant à :

   (i) faire tourner la broche dans trois orientations de rotation ou plus,
   (ii) utiliser le capteur de bord d'outil pour mesurer une position du bord de l'outil (12) dans le système de coordonnées de la machine-outil pour chacune des trois orientations de rotation ou plus,
   (iii) déterminer un point central de l'outil en ajustant les positions du bord de l'outil mesurées à l'étape (ii) à une fonction, et
   (iv) utiliser une différence de position entre le point central de l'outil déterminé à l'étape (iii) et la ligne centrale de la broche (20) pour déterminer une excentricité de l'outil.

2. Un procédé selon la revendication 1, dans lequel l'étape (i) comprend l'indexation de l'outil (12) dans les trois orientations de rotation ou plus et les mesures de l'étape (ii) sont prises alors que l'outil ne tourne pas.

3. Un procédé selon la revendication 1, dans lequel l'étape (i) comprend la rotation continue de l'outil (12) et les mesures de l'étape (ii) sont prises dans les trois orientations de rotation ou plus pendant que l'outil tourne.

4. Un procédé selon l'une quelconque des revendications précédentes, dans lequel l'étape (iii) comprend l'ajustement des trois positions mesurées ou plus du bord de l'outil à un cercle pour trouver le centre du cercle, le centre du cercle définissant le point central de l'outil.

5. Un procédé selon l'une quelconque des revendications précédentes, dans lequel l'étape (iv) comprend la détermination de l'excentricité de l'outil à une pluralité de positions le long de la longueur de l'outil (12).

6. Un procédé selon l'une quelconque des revendications précédentes, dans lequel l'outil (12) comprend un outil de coupe doté d'une pluralité de dents de coupe (14).

7. Un procédé selon l'une quelconque des revendications précédentes, dans lequel l'outil (12) comprend un outil de coupe doté de trois dents de coupe ou plus.

8. Un procédé selon l'une quelconque des revendications 6 à 7, dans lequel l'outil de coupe est un outil de coupe cannelé.

9. Un procédé selon l'une quelconque des revendications 6 à 8, dans lequel l'outil de coupe comporte un axe allongé (22) qui coïncide avec le point central de l'outil et chacune de la pluralité de dents de coupe (14) s'étend nominalement à la même distance radiale de l'axe allongé de l'outil.

10. Un procédé selon l'une quelconque des revendications précédentes, dans lequel l'outil (12) est un outil de coupe qui comprend une pluralité de dents de coupe qui sont espacées de manière sensiblement égale les unes des autres autour de la circonférence de l'outil, dans lequel les dents de coupe sont chacune espacées par une première séparation angulaire et les orientations de rotation de l'étape (ii) sont espacées par une seconde séparation angulaire, dans lequel la seconde séparation angulaire est un facteur de la première séparation angulaire.

11. Un procédé selon l'une quelconque des revendications précédentes, dans lequel l'outil (12) comprend une pluralité de dents de coupe qui sont espacées de manière sensiblement égale les unes des autres autour de la circonférence de l'outil et les trois orientations de rotation ou plus sont espacées de manière sensiblement égale les unes des autres autour de la circonférence de l'outil, dans lequel le nombre d'orientations de rotation partage un facteur commun avec le nombre de dents de coupe, le facteur commun étant un nombre entier supérieur à un.

12. Un procédé selon l'une quelconque des revendications précédentes, dans lequel l'étape (ii) comprend la prise de mesures du bord de l'outil dans au moins un plan sensiblement perpendiculaire à l'axe de rotation de l'outil.

13. Un procédé selon l'une quelconque des revendications précédentes, dans lequel le capteur de bord d'outil (2) comprend un dispositif de mesure d'outil sans contact à faisceau de rupture et l'étape (ii) comprend l'utilisation de la machine-outil pour déplacer la broche par rapport au capteur de bord d'outil.

14. Un appareil de détection d'outil pour mesurer l'excentricité d'un outil (12) maintenu dans une broche d'une machine-outil, la broche étant agencée pour faire tourner l'outil autour d'une ligne centrale de broche, l'appareil comprenant un capteur de bord d'outil (2) adapté pour être monté sur la machine-outil pour mesurer une position du bord de l'outil dans le système de coordonnées de la machine-outil à chacune de trois orientations de rotation ou plus et un processeur pour ajuster les positions mesurées du bord de l'outil (12) à une fonction pour déterminer un point central d'outil, une excentricité de l'outil (12) étant déterminée à partir d'une différence de position entre le point central d'outil et la ligne centrale de broche.

FIG. 1

FIG. 2c

FIG. 2b

FIG. 2a

FIG. 3b

FIG. 3a

FIG. 4a

FIG. 4b

Slice #2 (2 mm, 22.5°)

FIG. 5b

Slice #1 (0 mm, 0°)

FIG. 5a

| Dist from tool tip, mm | Tool Rotation, degrees | Outer Radius, mm | Inner Radius, mm | TIR, mm |
|---|---|---|---|---|
| 0 | 0.0 | 3.500 | 2.500 | 1.000 |
| 2 | 22.5 | 3.451 | 2.561 | 0.890 |

EP 4 042 102 B1

FIG. 6

FIG. 7

FIG. 8c

2 Tooth Cutter

FIG. 8b

FIG. 8a

FIG. 9b

FIG. 9a

3 Tooth Cutter

## FIG. 10c

FIG. 10a

FIG. 10b

FIG. 11a

FIG. 11b

FIG. 11c

4 Tooth Cutter

Experiment:  FIG. 12c

FIG. 12d

3 flute tool diameter and runout in 100μm steps from tool tip,
with tool running out by 102μm

4 flute tool diameter and runout in 100μm steps from tool tip,
with tool running out by 102μm

FIG. 12a

FIG. 12b

EP 4 042 102 B1

EP 4 042 102 B1

Flute Comparison:
Runout measurement error
(@ tool tip, based on 1mm TIR)

| # Flutes | Max Error |
|----------|-----------|
| 2 | 1.000 mm |

FIG. 13

Flute Comparison:
Runout measurement error
(@ tool tip, based on 1mm TIR)

| # Flutes | Max Error |
|----------|-----------|
| 2 | 1.000 mm |
| 3 | 0.110 mm |

FIG. 14

EP 4 042 102 B1

FIG. 15

EP 4 042 102 B1

All cutting edges rotate about the spindle centre

Tool Diameter

Rad #4

Rad #3

Rad #1

Rad #2

| Dist from tool tip, mm | Tool Rotation, degrees | Tip 1 Rad*COS 0° | Tip 2 Rad*SIN 90° | Tip 3 Rad*COS 180° | Tip 4 Rad*SIN 270° | 4 Tooth Outer Radius_2,mm | 4 Tooth TIR_2,mm |
|---|---|---|---|---|---|---|---|
| 0 | 0.0 | 3.500 | 3.041 | 2.500 | 3.041 | 3.500 | 1.000 |
| 2 | 22.5 | 3.451 | 2.850 | 2.561 | 3.216 | 3.451 | 0.965 |
| 4 | 45.0 | 3.345 | 2.691 | 2.691 | 3.345 | 3.345 | 0.930 |
| 6 | 67.5 | 3.198 | 2.592 | 2.859 | 3.418 | 3.418 | 0.895 |
| 8 | 90.0 | 3.031 | 2.570 | 3.031 | 3.430 | 3.430 | 0.860 |
| 10 | 112.5 | 2.868 | 2.623 | 3.181 | 3.385 | 3.385 | 0.825 |
| 12 | 135.0 | 2.735 | 2.735 | 3.291 | 3.291 | 3.291 | 0.791 |
| 14 | 157.5 | 2.655 | 2.877 | 3.352 | 3.164 | 3.352 | 0.756 |
| 16 | 180.0 | 2.640 | 3.022 | 3.360 | 3.022 | 3.360 | 0.721 |
| 18 | 202.5 | 2.686 | 3.147 | 3.319 | 2.886 | 3.319 | 0.686 |
| 20 | 225.0 | 2.779 | 3.238 | 3.238 | 2.779 | 3.238 | 0.651 |
| 22 | 247.5 | 2.896 | 3.287 | 3.131 | 2.718 | 3.287 | 0.616 |
| 24 | 270.0 | 3.014 | 3.291 | 3.014 | 2.709 | 3.291 | 0.581 |
| 26 | 292.5 | 3.115 | 3.254 | 2.906 | 2.750 | 3.254 | 0.546 |
| 28 | 315.0 | 3.186 | 3.186 | 2.825 | 2.825 | 3.186 | 0.511 |
| 30 | 337.5 | 3.221 | 3.099 | 2.781 | 2.917 | 3.221 | 0.476 |
| 32 | 360.0 | 3.221 | 3.008 | 2.779 | 3.008 | 3.221 | 0.441 |

FIG. 16

| # | $X_i$ | $Y_i$ |
|---|-------|-------|
| 1 | 3.500 | 0.000 |
| 2 | 0.000 | -3.041 |
| 3 | -2.500 | 0.000 |
| 4 | 0.000 | 3.041 |
| MEAN | 0.250 | 0.000 |

$\Rightarrow$

| # | $X_c$ | $Y_c$ |
|---|-------|-------|
| 1 | 3.250 | 0.000 |
| 2 | -0.250 | -3.041 |
| 3 | -2.750 | 0.000 |
| 4 | -0.250 | 3.041 |

$\Rightarrow$

| $\Sigma(X_i{*}X_c)$ | $\Sigma(Y_i{*}X_c)$ |
|---------------------|---------------------|
| $\Sigma(Y_i{*}X_c)$ | $\Sigma(Y_i{*}Y_c)$ |

| 18.250 | 0.000 |
|--------|-------|
| 0.000 | 18.500 |

FIG. 17

| # | $SOS_i$ | $X_c$ |
|---|---------|-------|
| 1 | 12.250 | 3.250 |
| 2 | 9.250 | -0.250 |
| 3 | 6.250 | -2.750 |
| 4 | 9.250 | -0.250 |

| $\Sigma(SOS_i \cdot X_c)/2$ | $\Sigma(SOS_i \cdot Y_c)/2$ |
|---|---|
| 9.000 | 0.000 |

FIG. 18

$$\begin{bmatrix} a & b \\ c & d \end{bmatrix}^{-1} = \frac{1}{ad-bc} \begin{bmatrix} d & -b \\ -c & a \end{bmatrix}$$

| | |
|---|---|
| 0.055 | 0.000 |
| 0.000 | 0.054 |

**FIG. 19**

$$\begin{bmatrix} X_0 \\ Y_0 \end{bmatrix} = \begin{bmatrix} 0.055 & 0.000 \\ 0.000 & 0.054 \end{bmatrix} \times \begin{bmatrix} 9.000 \\ 0.000 \end{bmatrix} = \begin{bmatrix} 0.493 \\ 0.000 \end{bmatrix} \therefore Rad = 0.493 \text{ mm}$$

**FIG. 20**

FIG. 21

FIG. 22c

FIG. 22d

Results: Ø0.07mm drill

Tool Runout Measurements

Difference between Camera and NC4 Blue runout measurements

FIG. 23a

× Camera (0.001mm)   ∗ NC4+Blue(0.001mm)   · Camera(0.003mm)

⊙ NC4+Blue(0.003mm)   ⊡ Camera (0.008mm)   ◇ NC4+Blue(0.008mm)

FIG. 23b

▨ 0.001mm   ▨ 0.003mm   ◳ 0.008mm

Results: Ø0.05mm drill

Tool Runout Measurements

× Camera (0.003mm)  · NC4+Blue(0.003mm)  ⊙Camera(0.006mm)

⊞NC4+Blue(0.006mm)

FIG. 24a

Difference between Camera and NC4 Blue runout measurements

▨ 0.003mm  ▨0.006mm

FIG. 24b

EP 4 042 102 B1

FIG. 25

**EP 4 042 102 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 110270705 A